# EUROPEAN PATENT SPECIFICATION

(11) **EP 2 634 852 B1**
(45) Date of publication and mention of the grant of the patent: **30.12.2015**
(21) Application number: 11836518.8
(22) Date of filing: 07.06.2011
(51) Int. Cl.: H01M 10/05, H01M 2/02, H01M 4/36, H01M 4/66, H01M 2/10, H01M 4/02, H01M 4/13, H01M 10/04, H01M 4/78

(54) **CABLE-TYPE SECONDARY BATTERY**
KABELSEKUNDÄRBATTERIE
ACCUMULATEUR SECONDAIRE DU TYPE À CÂBLE

(30) Priority: 26.10.2010 KR 20100104644
(43) Date of publication of application: 04.09.2013
(73) Proprietor: LG Chem, Ltd., Youngdungpo-gu Seoul 150-721 (KR)
(72) Inventor: KWON, Yo-Han, Daejeon 302-740 (KR); KIM, Je-Young, Daejeon 305-761 (KR)
(74) Representative: Goddar, Heinz J.
(86) International application number: PCT/KR2011/004144
(87) International publication number: WO 2012/057426

(56) References cited:
- WO-A1-2007/118281
- JP-A- 2001 110 244
- JP-A- 2010 129 412
- KR-A- 20090 009 598
- US-A1- 2003 162 086
- US-B1- 6 210 827

## Description

### TECHNICAL FIELD

The present invention relates to a cable-type secondary battery of free shape adaptation, and more particularly, to a cable-type secondary battery having an improved structure of a coating (cover member) surrounding a cable-type electrode assembly.

### BACKGROUND ART

This application claims priority to Korean Patent Application No. 10-2010-0104644 filed in the Republic of Korea on October 26, 2010, the entire contents of which are incorporated herein by reference.

Recently, advances in wireless communication technologies have led to the popularization of mobile devices, and to keep pace with this trend, there is a strong tendency to use secondary batteries as a power source of mobile devices. Secondary batteries are also used as a power source of environmentally friendly next-generation vehicles such as electric vehicles and hybrid vehicles.

As described above, as the use of secondary batteries is dramatically increasing in many fields of industry, secondary batteries are varying in output, capacity, structure, and the like, depending on the characteristics of the field where the secondary batteries are used.

Generally, a secondary battery is provided with an electrode assembly including a cathode and an anode, each having a plate-like current collector surface-coated with an active material, and a separator interposed between the cathode and the anode. The electrode assembly is received in a cylindrical or prismatic metal casing or a pouch-type casing of an aluminum laminate sheet, together with a liquid electrolyte or a solid electrolyte. To improve the capacity of the secondary battery, the electrode assembly may be a jelly-roll type in which a cathode sheet, a separator sheet, and an anode sheet are rolled together, or a stack-type in which a plurality of unit electrodes of a thin plate shape are sequentially stacked. Accordingly, the electrode (cathode and anode) of the electrode assembly has a substantially plate-like structure.

The conventional plate-like electrode structure is advantageous in that it has a high degree of integration when rolling or stacking, but has difficulty in adaptively changing the structure to meet the demand of the industrial field. Furthermore, the plate-like electrode structure has various problems in that it is sensitive to the change in volume of the electrode during charging/discharging, the gas generated in the cell may not easily discharge, and the potential difference between the electrodes may increase. Particularly, to meet the various needs of the users, the kinds of devices using secondary batteries are diversifying and a lot of emphasis is put on designing such devices. However, devices having a special shape need to offer a separate portion or space for mounting secondary batteries having a traditional structure and/or shape (cylindrical, prismatic, or pouch-type), which becomes a great obstacle when expanding the wireless technologies and developing new designs. For example, when a newly developed device has an elongated space for mounting a secondary battery, it is substantially impossible or very inefficient to structurally change the secondary battery including an electrode assembly made up of existing plate-like electrodes to suit the structure to the mounting space. In other words, since the conventional cylindrical, coin-type, and prismatic batteries have specific shapes, the batteries are limited in its use and ability to freely deform. Also, it is difficult to adaptively deform, for example, twist or bend, depending on where the batteries are used.

To solve these problems, the inventors have disclosed Korean Patent No. 10-0804411 (filed January 17, 2006, registered February 12, 2008) titled "electrode assembly of novel structure and secondary battery comprising the same".

However, this secondary battery (hereinafter referred to as a cable-type secondary battery) still has insufficient flexibility.

### DISCLOSURE

### Technical Problem

It is an object of the present invention to provide a secondary battery of an improved structure that is easily adaptable in shape to maintain stability and excellent performance.

### Technical Solution

A cable-type secondary battery of the present invention may include an electrode assembly and a cover member surrounding the electrode assembly, the electrode assembly including first and second electrodes of an elongated shape and a separator or an electrolyte layer interposed between the first and second electrodes, each electrode including a current collector having a cross section of a circular, asymmetrical oval or polygonal shape perpendicular to the lengthwise direction thereof and an electrode active material applied onto the surface of the current collector, wherein the cover member has a preset pattern of continuous or discontinuous scratch grooves on the surface thereof. Preferably, the scratch grooves have a depth of 10 to 30% to a thickness of the cover member.

The scratch grooves may have a linear pattern having a predetermined angle to the lengthwise direction of the cover member, or may also have a wavy pattern having a predetermined angle to the lengthwise direction of the cover member.

Also, the scratch grooves may have a grid pattern, and the scratch grooves may include a plurality of irregular grooves.

In this instance, the first and second electrodes of opposite polarity may each be an anode or a cathode. Preferably, the first electrode is an anode, and the second electrode is a cathode.

Preferably, the current collector is made from stainless steel, aluminum, nickel, titanium, sintered carbon, or copper; stainless steel surface-treated with carbon, nickel, titanium, or silver; aluminum-cadmium alloys; non-conductive polymer surface-treated with a conductive material; or conductive polymers. The conductive material may be any one selected from the group consisting of polyacetylene, polyaniline, polypyrrole, polythiophene, polysulfur nitride, indium thin oxide (ITO), silver, palladium, and nickel, or mixtures thereof. The conductive polymer may be any one selected from the group consisting of polyacetylene, polyaniline, polypyrrole, polythiophene, and polysulfur nitride, or mixtures thereof.

The anode active material layer may be formed from an active material including an active material particle of any one selected from the group consisting of natural graphite, artificial graphite, or carbonaceous materials; lithium-containing titanium composite oxides (LTOs); metals (Me) including Si, Sn, Li, Zn, Mg, Cd, Ce, Ni, and Fe; alloys of the metals (Me); oxides (MeOx) of the metals (Me); and composites of the metals (Me) and carbon, or mixtures thereof. The cathode active material layer may be formed from an active material including an active material particle of any one selected from the group consisting of LiCoO₂, LiNiO₂, LiMn₂O₄, LiCoPO₄, LiFePO₄, LiNiMnCoO₂, and LiNi_{1-x-y-z}CoₓM1_{y}M2_{z}O₂, or mixtures (M1 and M2 are each independently any one selected from the group consisting of Al, Ni, Co, Fe, Mn, V, Cr, Ti, W, Ta, Mg, and Mo, and x, y, and z are each independently an atomic fraction of each component in the oxide, where 0≤x<0.5, 0≤y<0.5, 0≤z<0.5, x+y+z ≤ 1).

The electrolyte layer may be formed from an electrolyte selected from the group consisting of a gel polymer electrolyte of polyethylene oxide (PEO), polyvinylidene fluoride (PVdF), polymethylmethacrylate (PMMA), polyacrylonitrile (PAN), or polyvinylacetate (PVAc); and a solid polymer electrolyte of PEO, polypropylene oxide (PPO), polyethylene imine (PEI), polyethyl sulfide (PES), or PVAc.

In the cable-type secondary battery of the present invention, the electrolyte layer may further include a lithium salt. The lithium salt may be any one selected from the group consisting of LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chlorine borane lithium, aliphatic lower lithium carbonate, and tetra-phenyl lithium borate, or mixtures thereof.

The separator may be any one selected from the group consisting of a microporous polyethylene film, a microporous polypropylene film, or a multilayered film of these films, and a polymer film for a polymer electrolyte of polyvinylidene fluoride, polyethylene oxide, polyacrylonitrile, or polyvinylidene fluoride-hexafluoropropylene copolymer.

### Advantageous Effects

The cable-type secondary battery of the present invention protects or coats the electrode assembly using the improved cover member having the scratch grooves, thereby improving the flexibility of the cable-type secondary battery.

### DESCRIPTION OF DRAWINGS

The accompanying drawings illustrate preferred embodiments of the present disclosure and, together with the foregoing disclosure, serve to provide further understanding of the technical spirit of the present disclosure. However, the present disclosure is not to be construed as being limited to the drawings.
FIG. 1 is a perspective view of a cable-type secondary battery according to an embodiment of the present invention.
FIG. 2 is a side elevation view of a cable-type secondary battery with a linear pattern of scratch grooves perpendicular to the lengthwise direction of a cover member according to an embodiment of the present invention.
FIG. 3 is a side elevation view of a cable-type secondary battery with a linear pattern of scratch grooves inclined to the lengthwise direction of a cover member according to an embodiment of the present invention.
FIG. 4 is a side elevation view of a cable-type secondary battery with a wavy pattern of scratch grooves having a predetermined angle to the lengthwise direction of a cover member according to an embodiment of the present invention.
FIG. 5 is a side elevation view of a cable-type secondary battery with a grid pattern of scratch grooves according to an embodiment of the present invention.
FIG. 6 is a side elevation view of a cable-type secondary battery with a plurality of irregular scratch grooves according to an embodiment of the present invention.

### DETAILED DESCRIPTION

The following detailed description is provided to assist the reader in gaining a comprehensive understanding of the methods, apparatuses, and/or systems described herein. Accordingly, various changes, modifications, and equivalents of the systems, apparatuses and/or methods described herein will be suggested to those of ordinary skill in the art. Also, descriptions of well-known functions and constructions may be omitted for increased clarity and conciseness.

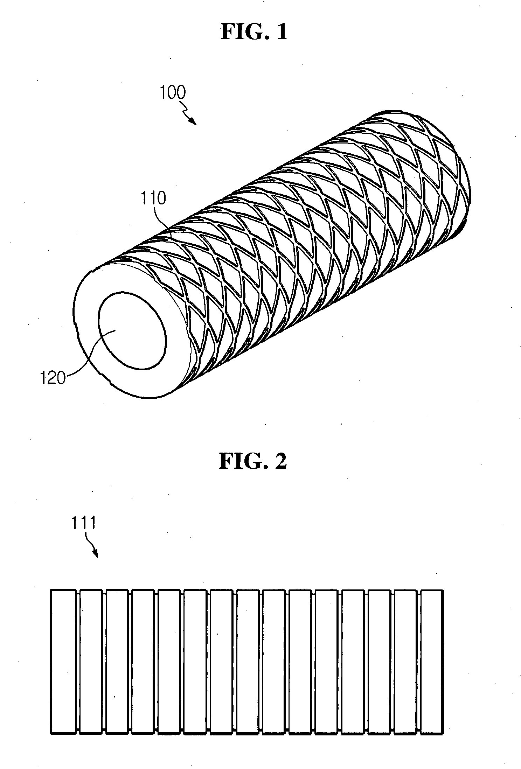

A cable-type secondary battery according to an embodiment of the present invention is schematically illustrated in FIG. 1. Although a few exemplary embodiments of the present invention are shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

Referring to FIG. 1, a cable-type secondary battery 100 according to an embodiment of the present invention may include an electrode assembly 120 and a cover member 110 surrounding the electrode assembly 120, the electrode assembly 120 including first and second electrodes of an elongated shape and a separator or an electrolyte layer interposed between the first and second electrodes, each electrode including a current collector having a cross section of a circular, asymmetrical oval or polygonal shape perpendicular to the lengthwise direction thereof, and an electrode active material applied onto the surface of the current collector. The cover member 110 may have a preset pattern of continuous or discontinuous scratch grooves on the surface thereof. The cable-type secondary battery of the present invention has a linear structure extending longitudinally and is flexible, so it is freely adaptable in shape. Here, the preset pattern is not limited to a specific pattern, and may include a repeated pattern and an irregular pattern without departing from the spirit and scope of the present invention. Also, the continuous scratch grooves may be defined as grooves that are not discontinuous and are at least three times longer than the diameter of the cable-type secondary battery of the present invention, and the discontinuous scratch grooves may be defined as grooves less than three times the diameter of the cable-type secondary battery of the present invention.

The electrode assembly 120 of the present invention is not limited to a specific type, and may be any type of electrode assembly including a cathode and an anode, and a separator or an electrolyte layer as an ion channel between the cathode and the anode. In this instance, the cathode may be made up of a cathode current collector and a cathode active material layer, and the anode may be made up of an anode current collector and an anode active material layer. Also, a plurality of cathodes and a plurality of anodes may contribute to the improvement of the battery performance.

The cover member 110 surrounding the electrode assembly 120 may have a preset pattern of scratch grooves on the surface thereof, to improve the flexibility of the cable-type secondary battery. When an external force is applied to the cable-type secondary battery, the scratch grooves of the cover member 110 may reduce the resistance to bending, so that the cover member 110 may be bent more easily. Also, even though the cover member 110 deforms due to an excessive external force, the scratch grooves may disperse the force concentrated on a specific area, thereby preventing the irreversible deformation.

Preferably, the scratch grooves have a depth of 10 to 30% to a thickness of the cover member 110. When the scratch grooves are too deep, the electrode assembly in the cover member may be exposed. When the scratch grooves are too shallow, a flexibility improvement effect may be insufficient. The cross section of the scratch grooves may be a square, a semicircle, a triangle, or any other various shapes depending on the manufacturing method.

The scratch grooves may be formed through post-processing, for example, by polishing with a sanding paper or by carving with a carving cutter having scratch groove patterns after the cover member 110 is formed, or may be formed by manufacturing the cover member 110 with scratch grooves through a mold having scratch groove patterns.

The cover member 110 of the present invention may be formed on the outer surface of the outer electrode assembly, and may serve as an insulator to protect the electrode from moisture in the air or from external impact. The cover member 110 may be formed from typical polymer resins, for example, polyvinyl chloride (PVC), high-density polyethylene (HDPE), or epoxy resin. Preferably, the current collector is made from stainless steel, aluminum, nickel, titanium, sintered carbon, or copper; stainless steel surface-treated with carbon, nickel, titanium, or silver; aluminum-cadmium alloys; non-conductive polymers surface-treated with a conductive material; or conductive polymers. The conductive material may include polyacetylene, polyaniline, polypyrrole, polythiophene, polysulfur nitride, indium thin oxide (ITO), silver, palladium, and nickel. The conductive polymer may include polyacetylene, polyaniline, polypyrrole, polythiophene, and polysulfur nitride. However, the non-conductive polymer used in the current collector is not limited to a specific type of non-conductive polymer.

The anode active material layer may include, but is not limited to, natural graphite, artificial graphite, carbonaceous materials; lithium-containing titanium composite oxides (LTOs); metals (Me) such as Si, Sn, Li, Zn, Mg, Cd, Ce, Ni, and Fe; alloys of the metals (Me); oxides (MeOx) of the metals (Me); and composites of the metals (Me) and carbon. The cathode active material may include, but is not limited to, LiCoO₂, LiNiO₂, LiMn₂O₄, LiCoPO₄, LiFeP04, LiNiMnCoO₂, and LiNi_{1-x-y-z}CoₓM1_{y}M2_{z}O₂ (M1 and M2 are each independently any one selected from the group consisting of Al, Ni, Co, Fe, Mn, V, Cr, Ti, W, Ta, Mg, and Mo, and x, y, and z are each independently an atomic fraction of each component in the oxide, where 0 ≤ x<0.5, 0 ≤ y<0.5, 0 ≤ z<0.5, x+y+z ≤ 1).

In the cable-type secondary battery of the present invention, the electrolyte layer surrounding the inner electrode serves as an ion channel, and is formed from a gel polymer electrolyte of polyethylene oxide (PEO), polyvinylidene fluoride (PVdF), polymethylmethacrylate (PMMA), polyacrylonitrile (PAN), or polyvinylacetate (PVAc); or a solid polymer electrolyte of PEO, polypropylene oxide (PPO), polyethylene imine (PEI), polyethyl sulfide (PES), or PVAc.

In the cable-type secondary battery of the present invention, the electrolyte layer may further include a lithium salt. The lithium salt may include, but is not limited to, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chlorine borane lithium, aliphatic lower lithium carbonate, and tetra-phenyl lithium borate.

The separator may be any one selected from the group consisting of a microporous polyethylene film, a microporous polypropylene film, or a multilayered film of these films, and a polymer film for a polymer electrolyte of polyvinylidene fluoride, polyethylene oxide, polyacrylonitrile, or polyvinylidene fluoride-hexafluoropropylene copolymer. When a separator is used, the separator needs to be impregnated with an electrolyte for ion migration. The electrolyte may include a salt represented by the formula of A⁺B⁻, wherein A⁺ represents an alkali metal cation such as Li⁺, Na⁺, K⁺ or their combinations, and B⁻ represents an salt containing an anion such as PF₆⁻, BF₄⁻, Cl⁻, Br₋, I⁻, ClO₄⁻, AsF₆⁻, CH₃CO₂⁻, CF₃SO₃⁻, N(CF₃SO₂)₂⁻, C(CF₂SO₂)₃⁻ or combinations thereof. The salt may be dissolved or dissociated in an organic solvent selected from propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma-butyrolactone (y-butyrolactone), or mixtures thereof. However, the present invention is not limited in this regard. The electrolyte may be poured during a suitable step in the fabrication of a battery, based on the fabrication process and the desired properties of a final product. In other words, the electrolyte may be poured before the battery assembly or at the end of the battery assembly.

In this instance, the first and second electrodes of opposite polarity may each be an anode or a cathode. Preferably, the first electrode is an anode and the second electrode is a cathode.

Hereinafter, a method for fabricating the foregoing cable-type secondary battery is briefly described below.

The cable-type secondary battery 100 according to an embodiment of the present invention may include the electrode assembly 120 and the cover member 110 surrounding the electrode assembly 120, the electrode assembly 120 including an anode and a cathode of an elongated shape and a separator or an electrolyte layer interposed between the anode and the cathode, the anode or the cathode including a current collector having a cross section of a circular, asymmetrical oval or polygonal shape perpendicular to the lengthwise direction thereof and an electrode active material applied onto the surface of the current collector. The cover member 110 may have a preset pattern of continuous or discontinuous scratch grooves on the surface thereof. First, the wire-type linear anode current collector is prepared and surface-coated with the anode active material layer. In this instance, a typical coating process may be used, specifically an electroplating process or an anodic oxidation process. Also, extrusion-coating of an electrode slurry including an active material through an extruder may be used, however the present invention is not limited in this regard.

Subsequently, the anode active material layer is surface-coated with the electrolyte layer. In this instance, a process for forming the electrolyte layer is not specially limited, however extrusion-coating is advantageous in fabricating the cable-type linear secondary battery due to the characteristics of the battery.

Then, the electrolyte layer is surface-coated with the cathode active material layer. The same coating process as the anode active material layer may be applied to the cathode active material layer. Next, the wire-type cathode current collector is formed on the outer surface of the cathode active material layer.

Finally, the cover member is formed on the outer surface of the wire-type current collector. The cover member is formed on the outmost surface and may act as an insulator to protect the electrode from moisture in the air or from external impact. The cover member may be made from typical polymer resins, for example, PVC, high-density polyethylene (HDPE), or epoxy resin. In particular, the scratch grooves of the cover member according to the present invention may be formed through further processing after the cover member is formed, or may be formed using a mold having scratch groove patterns when forming the cover member.

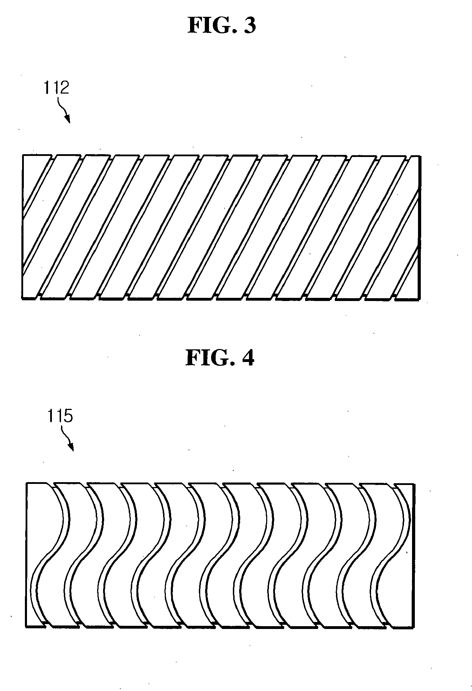

Referring to FIGS. 2 and 3, the scratch grooves 111 and 112 may have a linear pattern having a predetermined angle to the lengthwise direction of the cover member. Here, the predetermined angle may include various angles inclined vertically or horizontally to the lengthwise direction of the cover member.

Referring to FIG. 4, the scratch grooves 115 may have a wavy pattern having a predetermined angle to the lengthwise direction of the cover member. Here, the predetermined angle may include various angles inclined vertically or horizontally to the lengthwise direction of the cover member.

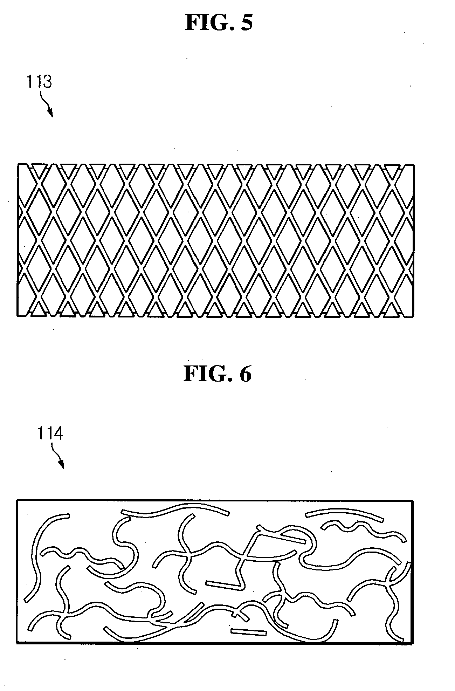

Referring to FIG. 5, the scratch grooves 113 may have a grid pattern. Referring to FIG. 6, the scratch grooves 114 may include a plurality of irregular scratch grooves.

## Claims

1. A cable-type secondary battery comprising:
an electrode assembly; and
a cover member surrounding the electrode assembly,
the electrode assembly including:
first and second electrodes of an elongated shape, each electrode including a current collector having a cross section of a circular, asymmetrical oval or polygonal shape perpendicular to the lengthwise direction thereof, and an electrode active material applied onto the surface of the current collector, and
a separator or an electrolyte layer interposed between the first and second electrodes,
wherein the cover member has a preset pattern of continuous or discontinuous scratch grooves on the surface thereof.

2. The cable-type secondary battery according to claim 1,
wherein the scratch grooves have a depth of 10 to 30% to a thickness of the cover member.

3. The cable-type secondary battery according to claim 1,
wherein the scratch grooves have a linear pattern having a predetermined angle to the lengthwise direction of the cover member.

4. The cable-type secondary battery according to claim 1,
wherein the scratch grooves have a wavy pattern having a predetermined angle to the lengthwise direction of the cover member.

5. The cable-type secondary battery according to claim 1,
wherein the scratch grooves have a grid pattern.

6. The cable-type secondary battery according to claim 1,
wherein the scratch grooves include a plurality of irregular grooves.

7. The cable-type secondary battery according to claim 1,
wherein the first electrode is an anode and the second electrode is a cathode.

8. The cable-type secondary battery according to claim 1,
wherein the active material layer of the first electrode is formed from an active material including an active material particle of any one selected from the group consisting of natural graphite, artificial graphite, or carbonaceous materials; lithium-containing titanium composite oxides (LTOs); metals (Me) including Si, Sn, Li, Zn, Mg, Cd, Ce, Ni, and Fe; alloys of the metals (Me); oxides (MeOx) of the metals (Me); and composites of the metals (Me) and carbon, or mixtures thereof.

9. The cable-type secondary battery according to claim 1,
wherein the active material layer of the second electrode is formed from an active material including an active material particle of any one selected from the group consisting of LiCoO₂, LiNiO₂, LiMn₂O₄, LiCoPO₄, LiFePO₄, LiNiMnCoO₂, and LiNi_{i-x-y-z}CoₓM1_{y}M2_{z}O₂, or mixtures (M1 and M2 are each independently any one selected from the group consisting of Al, Ni, Co, Fe, Mn, V, Cr, Ti, W, Ta, Mg, and Mo, and x, y, and z are each independently an atomic fraction of each component in the oxide, where 0 ≤ x<0.5, 0 ≤ y<0.5, 0 ≤ z<0.5, x+y+z ≤ 1).

10. The cable-type secondary battery according to claim 1,
wherein the current collector of the first electrode is made from stainless steel, aluminum, nickel, titanium, sintered carbon, or copper; stainless steel surface-treated with carbon, nickel, titanium, or silver; aluminum-cadmium alloys; non-conductive polymer surface-treated with a conductive material; or conductive polymers.

11. The cable-type secondary battery according to claim 1,
wherein the current collector of the second electrode is made from stainless steel, aluminum, nickel, titanium, sintered carbon, or copper; stainless steel surface-treated with carbon, nickel, titanium, or silver; aluminum-cadmium alloys; non-conductive polymer surface-treated with a conductive material; or conductive polymers.

12. The cable-type secondary battery according to claim 10 or 11,
wherein the conductive material is any one selected from the group consisting of polyacetylene, polyaniline, polypyrrole, polythiophene, polysulfur nitride, indium thin oxide (ITO), silver, palladium, and nickel, or mixtures thereof.

13. The cable-type secondary battery according to claim 10 or 11,
wherein the conductive polymer is any one selected from the group consisting of polyacetylene, polyaniline, polypyrrole, polythiophene, and polysulfur nitride, or mixtures thereof.

14. The cable-type secondary battery according to claim 1,
wherein the electrolyte layer is formed from an electrolyte selected from the group consisting of a gel polymer electrolyte of polyethylene oxide (PEO), polyvinylidene fluoride (PVdF), polymethylmethacrylate (PMMA), polyacrylonitrile (PAN), or polyvinylacetate (PVAc); and a solid polymer electrolyte of PEO, polypropylene oxide (PPO), polyethylene imine (PEI), polyethyl sulfide (PES), or PVAc.

15. The cable-type secondary battery according to claim 1,
wherein the electrolyte layer further includes a lithium salt.

16. The cable-type secondary battery according to claim 15,
wherein the lithium salt is any one selected from the group consisting of LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chlorine borane lithium, aliphatic lower lithium carbonate, and tetra-phenyl lithium borate, or mixtures thereof.

17. The cable-type secondary battery according to claim 1,
wherein the separator is any one selected from the group consisting of a microporous polyethylene film, a microporous polypropylene film, or a multilayered film of these films, and a polymer film for a polymer electrolyte of polyvinylidene fluoride, polyethylene oxide, polyacrylonitrile, or polyvinylidene fluoride-hexafluoropropylene copolymer.

## Patentansprüche

1. Sekundärbatterie des Kabeltyps, welche umfasst:
eine Elektrodenanordnung; und
ein Abdeckelement, das die Elektrodenanordnung umgibt,
wobei die Elektrodenanordnung einschließt:
erste und zweite Elektroden einer länglichen Form, wobei jede Elektrode einen Stromsammler mit einem Querschnitt einer kreisförmigen, asymmetrischen ovalen oder polygonalen Form senkrecht zur Längsrichtung derselben und ein Elektrodenaktivmaterial, das auf der Oberfläche des Stromsammlers beaufschlagt ist, einschließt und
einen Separator oder eine Elektrolytschicht, der bzw. die zwischen den ersten und zweiten Elektroden eingefügt ist,
wobei das Abdeckelement ein voreingestelltes Muster von kontinuierlichen oder diskontinuierlichen Kratzrillen auf der Oberfläche desselben aufweist.

2. Sekundärbatterie des Kabeltyps nach Anspruch 1, wobei die Kratzrillen eine Tiefe von 10 bis 30% zu einer Dicke des Abdeckelements aufweisen.

3. Sekundärbatterie des Kabeltyps nach Anspruch 1, wobei die Kratzrillen ein lineares Muster mit einem vorgegebenen Winkel zur Längsrichtung des Abdeckelements aufweisen.

4. Sekundärbatterie des Kabeltyps nach Anspruch 1, wobei die Kratzrillen ein Wellenmuster mit einem vorgegebenen Winkel zur Längsrichtung des Abdeckelements aufweisen.

5. Sekundärbatterie des Kabeltyps nach Anspruch 1, wobei die Kratzrillen ein Gittermuster aufweisen.

6. Sekundärbatterie des Kabeltyps nach Anspruch 1, wobei die Kratzrillen eine Vielzahl von unregelmäßigen Rillen einschließen.

7. Sekundärbatterie des Kabeltyps nach Anspruch 1, wobei die erste Elektrode eine Anode und die zweite Elektrode eine Kathode ist.

8. Sekundärbatterie des Kabeltyps nach Anspruch 1, wobei die aktive Materialschicht der ersten Elektrode aus einem aktiven Material gebildet ist, das ein aktives Materialteilchen irgendeines ausgewählt aus der Gruppe bestehend aus natürlichem Graphit, künstlichem Graphit oder kohlenstoffhaltigen Materialien; Lithium-enthaltenden Titanverbundoxiden (LtOs); Metallen (Me) einschließend Si, Sn, Li, Zn, Mg, Cd, Ce, Ni und Fe; Legierungen der Metalle (Me); Oxide (MeOx) der Metalle (Me); und Verbunde der Metalle (Me) und Kohlenstoff oder Mischungen derselben einschließt.

9. Sekundärbatterie des Kabeltyps nach Anspruch 1, wobei die aktive Materialschicht der zweiten Elektrode aus einem aktiven Material gebildet ist, das ein aktives Materialteilchen irgendeines ausgewählt aus der Gruppe bestehend aus LiCoO₂, LiNiO₂, LiMn₂O₄, LiCoPO₄, LiFePO₄, LiNiMnCoO₂ und LiNi_{1-x-y-z}CoₓM1_{y}M2_{z}O₂ oder Mischungen einschließt (wobei M1 und M2 jeweils unabhängig irgendeines ausgewählt aus der Gruppe bestehend aus Al, Ni, Co, Fe, Mn, V, Cr, Ti, W, Ta, Mg und Mo sind, und x, y und z jeweils unabhängig ein atomarer Bruchteil jeder Komponente in den Oxiden sind, wobei 0≤x<0,5, 0≤y<0,5, 0≤z<0,5, x+y+z≤1).

10. Sekundärbatterie des Kabeltyps nach Anspruch 1, wobei der Stromsammler der ersten Elektrode hergestellt ist aus rostfreiem Stahl, Aluminium, Nickel, Titan, gesintertem Kohlenstoff oder Kupfer; rostfreiem Stahl, der mit Kohlenstoff, Nickel, Titan oder Silber oberflächenbehandelt ist; Aluminium-Cadmium-Legierungen; nicht-leitfähigem Polymer, das mit einem leitfähigen Material oberflächenbehandelt ist; oder leitfähigen Polymeren.

11. Sekundärbatterie des Kabeltyps nach Anspruch 1, wobei der Stromsammler der zweiten Elektrode hergestellt ist aus rostfreiem Stahl, Aluminium, Nickel, Titan, gesintertem Kohlenstoff oder Kupfer; rostfreiem Stahl, der mit Kohlenstoff, Nickel, Titan oder Silber oberflächenbehandelt ist; Aluminium-Cadmium-Legierungen; nicht-leitfähigem Polymer, das mit einem leitfähigen Material oberflächenbehandelt ist; oder leitfähigen Polymeren.

12. Sekundärbatterie des Kabeltyps nach Anspruch 10 oder 11, wobei das leitfähigen Material irgendeines ausgewählt aus der Gruppe bestehend aus Polyacetylen, Polyanilin, Polypyrrol, Polythiophen, Polyschwefelnitrid, Indium-Zinn-Oxid (ITO), Silber, Palladium und Nickel oder Mischungen derselben ist.

13. Sekundärbatterie des Kabeltyps nach Anspruch 10 oder 11, wobei das leitfähige Polymer irgendeines ist, das ausgewählt ist aus der Gruppe bestehend aus Polyacetylen, Polyanilin, Polypyrrol, Polythiophen und Polyschwefelnitrid oder Mischungen derselben.

14. Sekundärbatterie des Kabeltyps nach Anspruch 1, wobei die Elektrolytschicht aus einem Elektrolyten gebildet ist, der ausgewählt ist aus der Gruppe bestehend aus Gelpolymerelektrolyt von Polyethylenoxid (PEO), Polyvinylidenfluorid (PVdF), Polymethylmethacrylat (PMMA), Polyacrylnitril (PAN) oder Polyvinylacetat (PVAc); und einem Festpolymerelektrolyten aus PEO, Polypropylenoxid (PPO), Polyethylenimin (PEI), Polyethylsulfid (PES), oder PVAc.

15. Sekundärbatterie des Kabeltyps nach Anspruch 1, wobei die Elektrolytschicht ferner ein Lithiumsalz einschließt.

16. Sekundärbatterie des Kabeltyps nach Anspruch 15, wobei das Lithiumsalz irgendeines ist, das ausgewählt ist aus der Gruppe bestehend aus LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, Chlorboran-Lithium, niederaliphatischem Lithiumcarbonat und Tetraphenyllithiumborat oder Mischungen derselben.

17. Sekundärbatterie des Kabeltyps nach Anspruch 1, wobei der Separator irgendeiner ist, der ausgewählt ist aus der Gruppe bestehend aus einem mikroporösen Polyethylenfilm, einem mikroporösen Polypropylenfilm oder einem mehrschichtigen Film dieser Filme, und einem Polymerfilm für einen Polymerelektrolyten aus Polyvinylidenfluorid, Polyethylenoxid, Polyacrylnitril oder Polyvinylidenfluorid-Hexafluorpropylen-Copolymer.

## Revendications

1. Accumulateur secondaire du type à câble comprenant :
un ensemble électrodes ; et
une membrane de recouvrement entourant l'ensemble électrodes,
l'ensemble électrodes comprenant :
des première et seconde électrodes d'une forme allongée, chaque électrode comprenant un collecteur de courant ayant une section transversale d'une forme circulaire, ovale ou polygonale asymétrique perpendiculaire à la direction dans le sens de la longueur de celle-ci et un matériau actif d'électrode appliqué sur la surface du collecteur de courant, et
une couche de séparation ou électrolytique interposée entre les première et seconde électrodes,
dans lequel l'élément de recouvrement présente un motif présélectionné de rainures de grattage continues ou discontinues sur la surface de celui-ci.

2. Accumulateur secondaire du type à câble selon la revendication 1,
dans lequel les rayures de grattage ont une profondeur de 10 à 30 % par rapport à une épaisseur de l'élément de recouvrement.

3. Accumulateur secondaire du type à câble selon la revendication 1,
dans lequel les rainures de grattage présentent un motif linéaire formant un angle prédéterminé par rapport à la direction dans le sens de la longueur de l'élément de recouvrement.

4. Accumulateur secondaire du type à câble selon la revendication 1,
dans lequel les rainures de grattage présentent un motif ondulé formant un angle prédéterminé par rapport à la direction dans le sens de la longueur de l'élément de recouvrement.

5. Accumulateur secondaire du type à câble selon la revendication 1,
dans lequel les rainures de grattage définissent un motif quadrillé.

6. Accumulateur secondaire du type à câble selon la revendication 1,
dans lequel les rainures de grattage comprennent une pluralité de rainures irrégulières.

7. Accumulateur secondaire du type à câble selon la revendication 1,
dans lequel la première électrode est une anode et la seconde électrode est une cathode.

8. Accumulateur secondaire du type à câble selon la revendication 1,
dans lequel la couche de matériau actif de la première électrode est formée à partir d'un matériau actif comportant une particule de matériau actif provenant de l'un quelconque des minéraux sélectionnés dans le groupe constitué de graphite naturel, de graphite artificiel ou de matières carbonées ; des oxydes composites de titane contenant du lithium (LTO) ; des métaux (ME) comprenant du Si, Sn, Li, Zn, Mg, Cd, Ce, Ni et du Fe ; des alliages des métaux (Me) ; des oxydes (MeOx) des métaux (Me) ; et des composites des métaux (Me) et du carbone, ou de mélanges de ceux-ci.

9. Accumulateur secondaire du type à câble selon la revendication 1,
dans lequel la couche de matériau actif de la seconde électrode est formée à partir d'un matériau actif comportant une particule de matériau actif provenant de l'un quelconque des éléments sélectionnés dans le groupe constitué de LiCoO₂, LiNiO₂, LiMn₂O₄, LiCoPO₄, LiFePO₄, LiNiMnCoO₂ et LiNi_{1-x-y-z}CoₓM1_{y}M2_{z}O₂ ou de mélanges (M1 et M2 représentent chacun indépendamment un élément quelconque sélectionné dans le groupe constitué de Al, Ni, Co, Fe, Mn, V, Cr, Ti, W, Ta, Mg et Mo et x, y et z représentent chacun indépendamment une fraction atomique de chaque composé contenu dans l'oxyde, où 0 ≤ x < 0,5, 0 ≤ y < 0,5, 0 ≤ z < 0,5, x + y + z ≤ 1).

10. Accumulateur secondaire du type à câble selon la revendication 1,
dans lequel le collecteur de courant de la première électrode est constitué d'acier inoxydable, d'aluminium, de nickel, de titane, de charbon fritté ou de cuivre ; d'acier inoxydable traité en surface avec du carbone, du nickel, du titane ou de l'argent ; d'alliages d'aluminium-cadmium ; de polymère non-conducteur traité en surface avec un matériau conducteur ; ou de polymères conducteurs.

11. Accumulateur secondaire du type à câble selon la revendication 1,
dans lequel le collecteur de courant de la seconde électrode est constitué d'acier inoxydable, d'aluminium, de nickel, de titane, de charbon fritté ou de cuivre ; d'acier inoxydable traité en surface avec du carbone, du nickel, du titane ou de l'argent ; d'alliages d'aluminium-cadmium ; de polymère non-conducteur traité en surface avec un matériau conducteur ; ou de polymères conducteurs.

12. Accumulateur secondaire du type à câble selon la revendication 10 ou 11,
dans lequel le matériau conducteur est l'un quelconque des matériaux sélectionnés dans le groupe constitué de polyacétylène, de polyaniline, de polypyrrole, de polythiophène, de nitrure de polysulfure, d'oxyde d'indium et d'étain (ITO), d'argent, de palladium et de nickel ou de mélanges de ceux-ci.

13. Accumulateur secondaire du type à câble selon la revendication 10 ou 11,
dans lequel le polymère conducteur est l'un quelconque des polymères sélectionnés dans le groupe constitué de polyacétylène, de polyaniline, de polypyrrole, de polythiophène et de nitrure de polysulfure ou de mélanges de ceux-ci.

14. Accumulateur secondaire du type à câble selon la revendication 1,
dans lequel la couche électrolytique est formée à partir d'un électrolyte sélectionné dans le groupe constitué d'un électrolyte gel polymère de polyéthylène oxyde (PEO), de polyvinylidène fluorure (PVdF), de polyméthylméthacrylate (PMMA), de polyacrylonitrile (PAN) ou de polyvinylacétate (PVAc) ; et d'un électrolyte solide polymère de PEO, de polypropylène oxyde (PPO), de polyéthylène-imine (PEI), de polyéthyle-sulfure (PES) ou de PVAc.

15. Accumulateur secondaire du type à câble selon la revendication 1,
dans lequel la couche électrolytique contient en outre du sel de lithium.

16. Accumulateur secondaire du type à câble selon la revendication 15,
dans lequel le sel de lithium est sélectionné dans le groupe constitué de LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, de lithium borane de chlore, de carbonate de lithium aliphatique inférieur et de borate de lithium tétra-phénylique ou de mélanges de ceux-ci.

17. Accumulateur secondaire du type à câble selon la revendication 1,
dans lequel la couche de séparation est un film quelconque sélectionné dans le groupe constitué d'un film de polyéthylène microporeux, d'un film de polypropylène microporeux ou d'un film multicouche de ces films et d'un film de polymère destiné à un électrolyte polymère de polyvinylidène fluorure, de polyéthylène oxyde ou d'un copolymère de polyvinylidène fluorure-hexafluoropropylène.
